# FASCICULE DE BREVET EUROPEEN

(11) **EP 0 747 673 B1**
(45) Date de publication et mention de la délivrance du brevet: **26.03.2003**
(21) Numéro de dépôt: 95810372.3
(22) Date de dépôt: 07.06.1995
(51) Int. Cl.: G01D 5/24

(54) **Dispositif de mesure capacitif**
Kapazitive Messvorrichtung
Capacitive measuring device

(43) Date de publication de la demande: 11.12.1996
(73) Titulaire: Brown & Sharpe Tesa S.A., 1020 Renens (CH)
(72) Inventeur: Jordil, Pascal, CH-1612 Ecoteaux (CH)
(74) Mandataire: Saam, Christophe

(56) Documents cités:
- US-A- 4 878 013

## Description

La présente invention concerne un dispositif de mesure capacitif selon le préambule de la revendication 1. Plus précisément, la présente invention concerne un dispositif de mesure capacitif comprenant une règle munie d'un réseau d'électrodes de règle et un capteur muni d'un réseau d'électrodes de capteur, le capteur pouvant se déplacer en face de ladite règle, les deux réseaux d'électrodes étant couplés capacitivement, de sorte que des signaux électriques peuvent être produit qui dépendent du couplage résultant et donc de la position relative du capteur et de la règle.

Des dispositifs de ce type sont utilisés par exemple dans des instruments de mesure de longueur ou d'angle tel que pied à coulisse, colonne de mesure ou rapporteur d'angle. Ils présentent l'avantage d'une mesure électronique précise, et sont plus économiques que des systèmes de mesure optiques. Les brevets ou demandes de brevet CH648929, US4878013, EP248165, EP501453, EP537800, EP435429, EP413922, EP404980, EP400626 entre autres décrivent des exemples de dispositifs connus.

De manière générale, ces dispositifs comprennent une règle formée d'un circuit imprimé ou d'un support en verre sur lequel sont déposées les électrodes de règle. Le capteur est constitué d'un deuxième circuit imprimé muni d'un réseau d'électrodes de capteur placées face aux électrodes de la règle. Les électrodes de règle et les électrodes de capteur constituent ainsi les armatures mobiles l'une par rapport à l'autre d'un réseau de condensateurs. Le couplage capacitif entre les électrodes de capteur et les électrodes de règle varie selon la position relative du capteur par rapport à la règle. Cette information est évaluée afin d'afficher la mesure de position.

Dans ces dispositifs, la précision de mesure atteignable est restreinte par différents facteurs tels que les imperfections géométriques du capteur ou de la règle, notamment des imprécisions de placement mutuel, un manque de planéité ou des irrégularités de surface ou par des imprécisions dans la géométrie des électrodes du capteur et de la règle. En particulier, les électrodes du capteur sont généralement réalisées avec les techniques connues pour la fabrication des circuits imprimés. Il est difficile avec ces techniques d'obtenir une précision dans la géométrie des électrodes qui soit compatible avec les résolutions de mesure désirées. La règle souffre de problèmes similaires, du moins lorsqu'elle est fabriquée à partir d'un circuit imprimé. En outre, des erreurs mécaniques, dues par exemple à des imprécisions de construction ou à des dilatations, provoquent des modifications de l'espacement entre les électrodes du capteur et de la règle, donc des variations des capacités mesurées difficiles à prévoir ou à corriger. Dans les brevets susmentionnés, plusieurs façons de placer les électrodes sur le capteur et sur la règle ont été imaginées qui permettent de compenser au moins partiellement ces différents facteurs d'erreur et d'augmenter la précision.

### Art antérieur

Dans le brevet CH648929 (TESA), les électrodes de capteur sont réparties en quatre groupes (A1, A2, B1, B2) déphasés entre eux de 90°. Chaque groupe est formé de trois électrodes distinctes, ce qui permet de répartir et de moyenner au moins partiellement certaines erreurs.

Toutefois, dans ce brevet, toutes les électrodes de chacun des groupes d'électrodes sont placées dans le même coin du capteur. Sur la figure 1 de ce brevet, on constate ainsi que toutes les électrodes du groupe A1 sont placées dans le coin supérieur gauche du capteur, toutes celles du groupe 82 dans le coin inférieur gauche, et ainsi de suite. Ce dispositif est par conséquent très sensible aux erreurs de positionnement du capteur face à la règle, et notamment au pivotement du capteur autour de son axe longitudinal.

Dans le brevet EP404980 par exemple, les électrodes de capteur sont également réparties en quatre groupes (1, 2, 3, 4) déphasés entre eux de 90°. Sur la figure 4 de ce brevet, chaque groupe est constitué de 5 électrodes distinctes réparties plus ou moins sur toute la surface du capteur, de manière à ce que les groupes soient mélangés. Les électrodes successives appartiennent donc respectivement aux groupes 1,2,3,4,1,2,3,4,1,2,3 et ainsi de suite. Une succession identique d'électrodes se répète donc périodiquement.

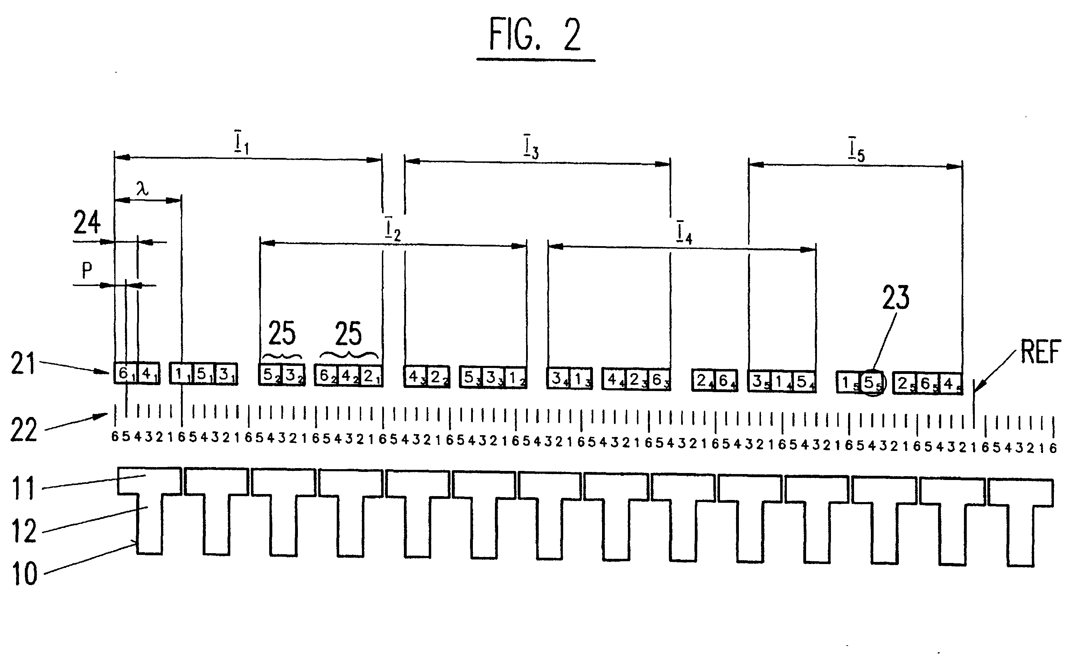

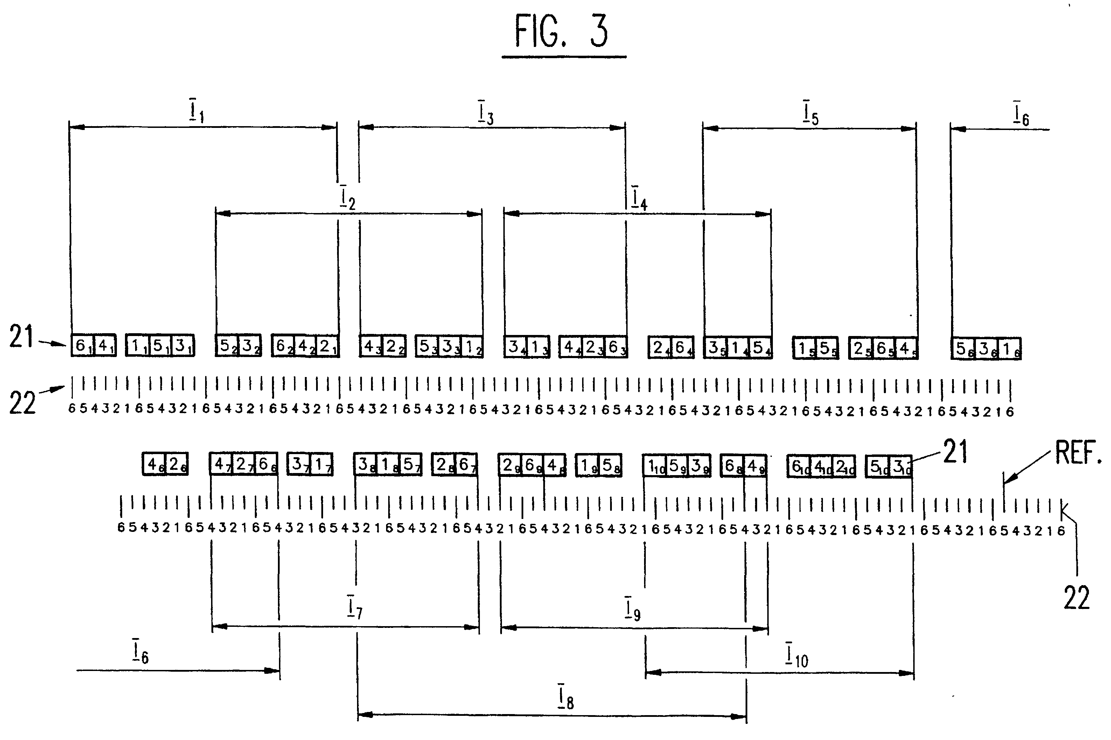

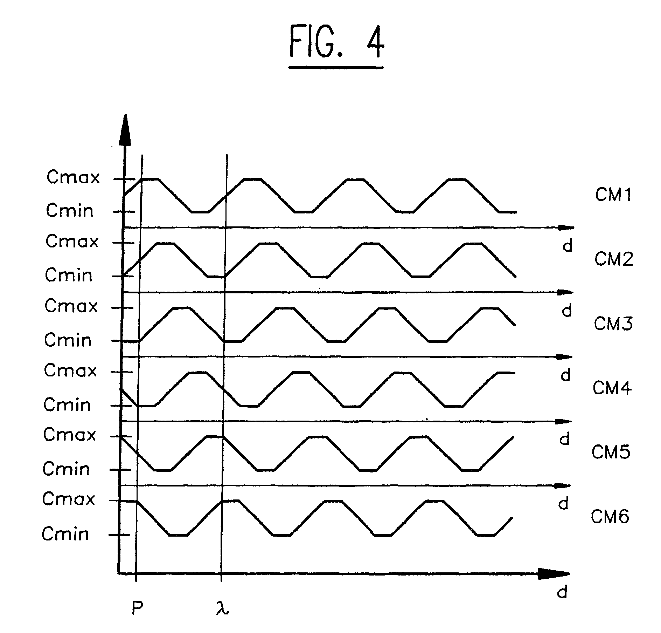

Le brevet US4878013 (Andermo) propose également diverses manières de disposer les électrodes sur le capteur. En particulier, les figures 3 à 5 de ce brevet illustrent différentes manières de répartir les électrodes sur le capteur de façon à répartir les électrodes de chaque groupe (de 1 à 6) plus ou moins uniformément sur toute la surface du capteur. Les différents groupes d'électrodes sont donc également entremêlés. Sur le capteur de la figure 4 de ce brevet, les électrodes successives appartiennent respectivement aux groupes 1,3,5,4,6,2 puis la succession se répète périodiquement. Dans le cas d'un capteur comprenant un grand nombre d'électrodes, par exemple plus de 50, réparties en un nombre de groupes assez faible, par exemple 6, la même succession d'électrodes se répète donc plusieurs fois. Avec les réalisations des figures 2 et 4, la succession se répète certes moins souvent, mais la fréquence des motifs ainsi constitués reste élevée.

En raison des techniques utilisées notamment pour la fabrication de la règle et surtout du capteur, certaines imprécisions de géométrie se répètent périodiquement. C'est par exemple le cas de certaines erreurs de positionnement ou de variation de surface des électrodes engendrées par la technique de gravure utilisée. Lorsque la fréquence de répétition de ces erreurs est dans un rapport entier avec la fréquence de répétition des motifs d'électrodes sur le capteur, les erreurs résultantes sur toutes les électrodes d'un groupe peuvent s'additionner au lieu de se compenser. Le fonctionnement correct du dispositif n'est ainsi pas garanti.

Entre outre, comme la succession d'électrodes sur le capteur se répète, les électrodes de chaque groupe se retrouvent régulièrement placées à côté des électrodes d'un autre même groupe. Par exemple, sur la figure 4 de ce brevet, les électrodes du groupe 3 se retrouvent toujours entre celles du groupe 1 et celles du groupe 5. Le couplage parasite entre les électrodes du groupe 3 et celles du groupe 1 est donc bien supérieure au couplage entre les électrodes du groupe 3 et celles du groupe 6 par exemple. Il en résulte des asymétries de fonctionnement qui peuvent fausser la mesure.

La demande de brevet EP537800 (Mitutoyo) ainsi que le brevet EP400626 (Mitutoyo) décrivent un capteur dans lequel les électrodes ont une forme et une surface variable. Cette configuration permet de compenser certaines erreurs de parallélisme et de pivotement du capteur. Les problèmes spécifiques liés à la périodicité des électrodes subsistent cependant. En outre, le couplage capacitif obtenu est limité par la taille des électrodes, dont certaines sont très petites. Il est donc nécessaire pour obtenir un couplage suffisant pour la mesure que le capteur se déplace à très faible distance au-dessus de la règle, ce qui pose des problèmes de fabrication mécanique.

### Buts de l'invention.

Un but de l'invention est donc de proposer un capteur capacitif selon le préambule de la revendication 1, mais qui ne présente pas les inconvénients mentionnés.

Un autre but est de proposer de nouvelles règles de disposition des électrodes, adaptées à différentes tailles et différents types de capteurs, qui permettent de limiter les problèmes de couplage parasite entre groupes d'électrodes et les problèmes liés aux défauts de fabrication du capteur et de la règle.

Un autre but est d'obtenir un couplage capacitif suffisant entre les électrodes de la règle et les électrodes du capteur.

Selon l'invention, ces buts sont atteints grâce aux éléments de la partie caractérisante de la revendication 1.

En particulier, ces buts sont atteints grâce à un placement des électrodes à entropie élevée. Selon les nouvelles règles de placement de l'invention, les intervalles de jeu occupés par les jeux d'électrodes successifs se chevauchent au moins partiellement, en sorte que les différents jeux d'électrodes sont entremêlés. Un jeu d'électrodes est défini comme étant constitué par un ensemble comportant une et une seule électrode de chaque groupe.

On dispose grâce à cette caractéristique d'une plus grande liberté pour le placement des électrodes sur le capteur que dans le cas où les jeux d'électrodes ne se chevauchent pas. Il est ainsi possible de réduire considérablement la périodicité des électrodes, et d'augmenter l'entropie de placement des électrodes.

Selon une autre caractéristique de l'invention, pour augmenter encore la liberté de placement des électrodes, le nombre de positions initiales possibles inoccupées entre les différents paquets d'électrodes est variable.

Selon une autre caractéristique de l'invention, la largeur des électrodes de capteur est supérieure à l'espacement entre les positions initiales possibles que peuvent prendre les électrodes.
- La figure 1 est une vue d'ensemble schématique montrant un exemple de placement relatif du capteur et de la règle.
- La figure 2 montre un premier exemple de placement des électrodes de capteur selon l'invention.
- La figure 3 montre un deuxième exemple de placement des électrodes de capteur selon l'invention.
- La figure 4 montre la variation de capacité sur les différents groupes d'électrodes en fonction de la position relative du capteur et de la règle.

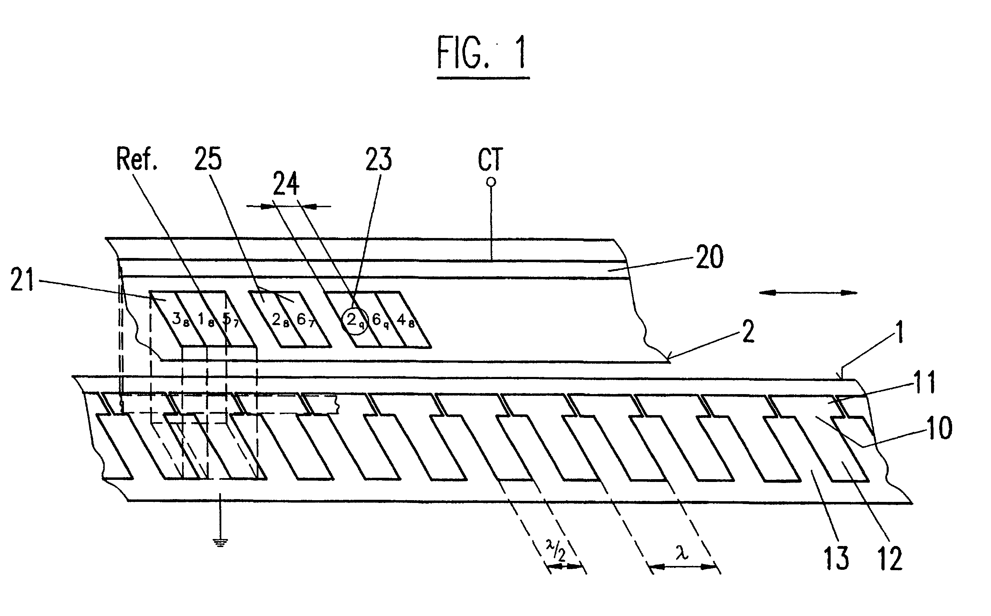

Le dispositif de mesure comporte une règle 1 représentée à la figure 1. Elle est de préférence fixe par rapport à l'ensemble du dispositif de mesure capacitif, alors que le capteur capacitif 2 peut se déplacer à faible distance au-dessus de la règle. Dans le cas où le dispositif de mesure constitue une colonne de mesure ou un pied à coulisse, la règle 1 est solidaire du bâti ou de la règle du dispositif, alors que le capteur 2 est associé à un coulisseau pouvant coulisser le long du bâti ou de la règle. La longueur du capteur est typiquement de l'ordre de quelques centimètres contre plusieurs dizaines de centimètre pour la règle. D'autres dispositions, en particulier une inversion de la règle et du capteur, sont aussi possibles. Dans le cas d'un dispositif de mesure d'angle ou de rotation d'un axe, la règle peut être constituée par un réseau d'électrodes sur la périphérie d'un axe, et le capteur placé à l'intérieure d'une bague cylindrique autour de cet axe, comme expliqué par exemple dans le brevet EP435429.

La règle est par exemple une règle en verre sur laquelle des électrodes 10 sont déposées par métallisation. Dans une variante, la règle pourrait aussi être réalisée avec la technique de fabrication des circuits imprimés. Le capteur 2 est de préférence réalisée au moyen d'une plaquette de circuit imprimé sur laquelle des électrodes de capteur sont gravées. Une partie de l'électronique de traitement, non représentée sur cette figure, peut être placée directement sur cette plaquette. Dans une variante, le capteur peut être réalisé avec la technique de fabrication des circuits intégrés, permettant moyennant un coût plus élevé de réaliser des électrodes très fines et très précises.

Les électrodes de règle 10 ont dans cet exemple de réalisation une forme de T, la barre supérieure 11 du T fonctionnant comme électrode de réception et la tige 12 du T comme électrode de transmission. Les électrodes de règle sont isolées les unes des autres. La partie 13 de la règle entre les électrodes de règle 10, qui est métallisée tout en étant isolée des électrodes 10 en T, est reliée à la masse. Les électrodes de règle 11 sont espacées par un pas de règle λ. La largeur de la tige des électrodes de règle, c'est-à-dire des électrodes de transmission, vaut λ/2.

Le capteur 2 comporte une électrode d'excitation 20 à laquelle est appliqué un signal d'excitation pulsé CT. Cette électrode d'excitation est placée face aux électrodes de réception 11 de la règle, de manière à recouvrir plusieurs électrodes successives. La largeur de l'électrode d'excitation est égale ou légèrement inférieure à la largeur 24 des électrodes de réception de la règle. De cette manière, le signal d'excitation CT est transmis capacitivement aux électrodes de réception 11 sous le capteur. Le signal ainsi récolté est directement transmis aux tiges 12 des électrodes de règle, qui fonctionnent comme électrodes de transmission. Ces électrodes de transmission polarisent en retour les électrodes de capteur 21 placées au-dessus, sur le capteur.

Un fonctionnement inversé du dispositif de mesure est également possible, c'est-à-dire que l'on peut appliquer des signaux aux électrodes de capteur 21, de manière à polariser les tiges 12 des électrodes de règle, puis les têtes 11, et à polariser en retour l'électrode 20 qui fonctionne alors en électrode de mesure.

Le placement des électrodes de capteur 21 selon l'invention n'est pas limité à cette disposition particulière des autres électrodes sur le capteur et sur la règle. Il est par exemple aussi possible de supprimer les électrodes d'excitation 20 et de réception 11, et d'appliquer le signal CT directement aux électrodes de transmission 12 de la règle.

Les signaux récoltés sur les électrodes de capteur 21 dépendent du couplage capacitif entre les électrodes de transmission 12 de la règle et les électrodes de capteur 21, et donc de la position relative du capteur par rapport à la règle. Lorsque le capteur se déplace, les signaux récoltés varient de manière périodique.

Chaque électrode de capteur 21 appartient selon sa position initiale à un groupe déterminé. L'indice de groupe i de chaque électrode est déterminé comme valant 1 plus la distance modulo N entre sa position initiale et une position de référence Ref le long du réseau d'électrodes de capteur, N étant un nombre entier égal au nombre de groupes distincts. Les électrodes de capteur sont en outre réparties en au moins deux jeux d'électrodes, un jeu d'électrodes étant défini comme un ensemble de largeur minimale, comportant N électrodes ayant chacune un indice de groupe différent, de sorte que chaque électrode appartienne à un et un seul jeu. Sur les figures, chaque électrode est ainsi référencée par une désignation 23 de type Gⱼ, G désignant l'indice de groupe de l'électrode et j son indice de jeu. Par exemple, l'électrode 3₂ désigne l'électrode dans le deuxième jeu dont la position initiale est dévolue au groupe 3. Pour en finir avec la terminologie, le terme paquet désignera par la suite un ensemble 25 d'électrodes directement adjacentes, c'est-à-dire qui ne sont pas séparées par des positions initiales possibles inoccupées.

Dans le premier exemple de placement des électrodes, illustré par la figure 2, les électrodes de capteur 21 sont ainsi réparties en 5 jeux d'électrodes, chaque jeu comportant N=6 électrodes. Dans l'exemple de placement de la figure 3, les électrodes sont réparties en 10 jeux de N=6 électrodes. N pourrait évidemment prendre une valeur différente de 6, par exemple 4, 8, 10 ou 12. D'autres modes de répartition des électrodes en groupes et en jeux sont naturellement également possibles. L'invention s'applique aussi à des dispositifs dans lesquels le nombre d'électrodes par groupe est variable.

Les intervalles occupés par les jeux successifs d'électrodes de capteur sont illustrés sur les figures 2 et 3 par des flèches et référencés par des désignations de type Iⱼ, j prenant la valeur de l'indice du jeu particulier. On constate que ces intervalles peuvent selon les réalisations être de largeur constante ou non.

Les électrodes de capteur occupent certaines des positions initiales possibles 22, définies à partir d'une position de référence Ref comme étant régulièrement espacées par un intervalle élémentaire P. La largeur de l'intervalle élémentaire P est égale à la largeur du pas de règle λ divisé par N. Typiquement, le pas de règle λ vaut quelques millimètres et, si N vaut 6, la largeur de l'intervalle élémentaire P vaut donc quelques dixièmes de millimètres. La position de référence Ref peut être choisie arbitrairement le long du réseau d'électrodes de capteur.

Selon une caractéristique de cette invention, la largeur 24 des électrodes de capteur 21 est supérieure à la largeur P des intervalles élémentaires entre les positions initiales possibles 22. Le couplage capacitif entre les électrodes de transmission 12 de la règle et les électrodes de capteur 21 est ainsi amélioré par rapport au cas où la largeur est égale à la largeur de l'intervalle élémentaire P. De préférence, la largeur 24 des électrodes de capteur 21 est juste inférieure au double de la largeur des intervalles élémentaires P, de manière à pouvoir isoler mutuellement les électrodes. Il est également possible d'imaginer des configurations dans lesquelles la largeur des électrodes n'est pas la même pour toutes les électrodes. La longueur des électrodes de capteur 21 est égale ou légèrement inférieure à la longueur des électrodes de transmission 12 sur la règle.

Selon une caractéristique de l'invention, les électrodes de capteur 21 sont placées selon une séquence pseudo-aléatoire, c'est-à-dire présentant une très faible répétitivité du motif constitué par les appartenances aux N groupes des électrodes successives. La succession est donc non périodique, ce qui permet de compenser de manière optimale les défauts et imprécisions périodiques du capteur 2 ou de la règle 1. Ces défauts périodiques peuvent être dus par exemple à la résolution limitée du programme et du plotter utilisés pour la fabrication du capteur et de la règle. En outre, cette structure non périodique permet de limiter les erreurs dues aux couplages parasites entre les électrodes des différents groupes.

Afin d'obtenir une plus grande liberté de placement des électrodes, et donc de diminuer la périodicité, les intervalles de jeu Iⱼ occupés par les jeux successifs s'interpénètrent, en sorte que les différents jeux sont mélangés. Plus précisément sur la figure 2, la succession des électrodes de capteur 21 est 6₁, 4₁, 1₁, 5₁, 3₁ puis 5₂, 3₂, 6₂, 4₂ et 2₁. La dernière électrode 2₁ du jeu X₁ est séparée des autres électrodes du même jeu par quatre électrodes appartenant au jeu X₂. On constate que les jeux d'électrodes X₁ et X₂ s'interpénètrent, et que la profondeur d'interpénétration est variable.

Cette caractéristique permet en outre d'étaler les intervalles Iⱼ occupés par les jeux successifs d'électrodes sur des largeurs plus importantes. Comme les irrégularités mécaniques ont généralement une fréquence faible, on parvient ainsi à améliorer leur compensation.

Pour obtenir un plus grand choix encore dans le placement des électrodes de capteur, le nombre de positions initiales possibles 22 inoccupées entre les différents paquets d'électrodes 25 est de préférence variable. Sur la figure 2 par exemple, une seule position initiale possible est disponible entre les paquets {6₁;4₁} et {1₁;5₁:3₁}, tandis que deux positions initiales possibles sont disponibles entre les paquets {1₁;5₁:3₁} et {5₂;3₂}. De cette manière, on peut encore notablement réduire la périodicité des électrodes de capteur 21 et accroître l'entropie de placement.

Le nombre d'électrodes de capteur 21 dans chaque groupe est identique, afin que les signaux fournis par chaque groupe d'électrodes aient une forme la plus semblable possible. Une autre solution pourrait être d'avoir un nombre d'électrodes par groupe variable, et donc certains jeux qui seraient incomplets. Il serait alors nécessaire de compenser la surface totale des électrodes qui n'est pas constante, en prévoyant des électrodes de taille variable ou des moyens adaptés dans l'électronique de traitement.

Il est généralement souhaitable qu'un grand nombre des positions initiales possibles 22 pour les électrodes de capteur 21 soit occupé, afin d'améliorer le couplage capacitif. Dans l'exemple de placement de la figure 2, la non-périodicité est optimale, et le nombre d'électrodes par groupe constant, mais le nombre de positions initiales 22 restées inoccupées est assez important. Lorsque la place disponible est suffisante sur le capteur, par exemple dans des capteurs de grande dimension destinés à des colonnes de mesure, on peut améliorer le couplage capacitif en ajoutant des jeux d'électrodes supplémentaires, comme dans le placement de la figure 3.

Il serait possible d'augmenter la densité des électrodes de capteur 21 en ajoutant des électrodes entre les paquets. On obtiendrait cependant alors une structure qui présenterait de nouveau une certaine périodicité, inférieure toutefois à celle de la plupart des dispositifs de l'art antérieur.

La figure 4 montre les variations des capacités résultantes CMᵢ entre les électrodes de transmission 12 de la règle et les différents groupes d'électrodes lorsque le capteur 2 se déplace face à la règle 1, dans l'exemple avec N=6. La capacité CM₁ correspond à la capacité résultante entre les électrodes de transmission 12 et toutes les électrodes du groupe X₁, la capacité CM₂ à la capacité résultante entre les électrodes de transmission 12 et toutes les électrodes du groupe X₂ et ainsi de suite. Les capacités CMᵢ varient périodiquement entre Cₘₐₓ et Cₘᵢₙ. La capacité Cₘₐₓ correspond à la situation dans laquelle les électrodes de capteur 21 du groupe considéré recouvrent les électrodes de règle 12 sans débordement latéral, par exemple à la capacité correspondant au groupe X₅ dans la position du capteur illustrée par la figure 1. La capacité Cₘᵢₙ correspond aux capacités de fuite lorsque les électrodes ne se recouvrent absolument pas, par exemple à la capacité pour le groupe X₁ dans la position du capteur illustrée par la figure 1. En pratique, on peut approximer que Cₘᵢₙ est égal à zéro. La période de variation est égale au pas de règle λ. Le déphasage entre les capacités correspondant aux différents groupes est égal à 360°/N, soit 60° dans cet exemple avec N=6. Ce déphasage correspond à la largeur de l'intervalle élémentaire P entre les positions initiales possibles 22 pour les électrodes de capteur 21. Il est ainsi possible d'obtenir une définition inférieure à celle définie par le pas de règle λ.

Deux types principaux de circuits de mesure peuvent être utilisés pour déterminer la position du capteur 2 par rapport à la règle 1. Le premier type, décrit par exemple dans le brevet déjà mentionné CH648929, est dit à injection simple et réception multiple. Le principe consiste à injecter un seul signal d'excitation CT à l'électrode d'excitation 20 du capteur 2, et à mesurer les signaux reçus par les N différents groupes d'électrodes de capteur 21. Les N capacités CMᵢ résultantes à chaque instant sont alors mesurées, par exemple par équilibrage d'un pont capacitif, et permettent de déterminer la position du capteur.

Le deuxième type, décrit par exemple dans la demande de brevet EP94105586.5 ou dans les brevets EP184584 et EP053091, est dit à injection multiple et réception simple. Le principe général consiste à injecter N signaux différents, par exemple déphasés entre eux, sur les N groupes d'électrodes de capteur 21, et à mesurer le signal reçu sur l'électrode 20, fonctionnant alors comme électrode de réception. Selon la forme et le type des signaux injectés, on utilise généralement la phase, l'amplitude ou la variation de fréquence du signal reçu comme information pour déterminer la position du capteur 2 par rapport à la règle 1. Pour réduire les perturbations extérieures, il est connu de moduler les N signaux avant de les appliquer sur les électrodes, et de démoduler le signal reçu sur l'électrode 20. Il est fréquent avec ce deuxième type de prévoir une double électrode de réception 20 sur le capteur, et d'adapter la disposition des électrodes de règle 10 de manière à obtenir des signaux décalés de 180° sur les deux électrodes de réception.

D'autres types de circuits de mesure peuvent bien entendu également être appliqués qui utilisent les avantages du placement des électrodes de capteur 20 selon l'invention. Selon le type de circuit, la disposition, la forme et le fonctionnement des électrodes sur le capteur et la règle peuvent varier sensiblement par rapport à l'exemple illustré par la figure 1.

La description et les figures se rapportent essentiellement au cas d'un dispositif de mesure de longueur, tel que pied à coulisse ou calibre de hauteur. L'invention est cependant sans difficulté applicable à d'autres types de dispositifs de mesure capacitif, tels que dispositifs de mesure d'angle, de position angulaire, de vitesse linéaire ou angulaire, etc...

## Revendications

1. Dispositif de mesure capacitif comprenant une règle (1) munie d'un réseau d'électrodes de règle (11) espacées par un pas de règle (λ) et un capteur pouvant se déplacer en face de ladite règle, le capteur étant muni d'un réseau d'électrodes de capteur (21), dans lequel:
les électrodes de capteur (21) sont placées à des positions initiales (22) espacées les unes des autres par un intervalle élémentaire (P) obtenu en divisant le pas de règle (λ) par N, N étant un entier supérieur ou égal à 2, en sorte que la phase des électrodes de capteur prend N valeurs différentes,
chaque électrode de capteur (21) a un indice de groupe (23) correspondant à 1 plus le nombre modulo N d'intervalles élémentaires (P) entre la position initiale (22) de cette électrode et une position de référence (Ref) le long du réseau d'électrodes de capteur.
des électrodes de capteur (21) ayant le même indice de groupe (23) et donc là même phase sont séparées par des électrodes de capteur ayant un indice de groupe différent,
lesdites électrodes de capteur (21) sont réparties sur le capteur (2) en au moins deux jeux d'électrodes, un jeu d'électrodes étant défini comme un ensemble de N électrodes ayant un indice de groupe (23) différent, chaque électrode de capteur (21) appartenant à un seul jeu,
chaque jeu d'électrodes de capteur (21) est étalé sur un intervalle de jeu (Iⱼ) supérieur au pas de règle (λ),
les capacités (Cmi) constituées entre les électrodes de règle (11) et les groupes d'électrodes de capteur (21) dépendent de la position relative du capteur (2) par rapport à la règle (1),
**caractérisé en ce que**
- les intervalles de jeu (Iⱼ) occupés par lesdits jeux successifs d'électrodes de capteur s'interpénètrent, en sorte que les différents jeux sont entremêlés.

2. Dispositif de mesure capacitif selon la revendication 1, **caractérisé en ce que** les électrodes de capteur (21) sont réparties en paquets (25), chaque paquet étant constitué par une électrode ou par plusieurs électrodes directement adjacentes, et en ce le nombre de positions initiales possibles (22) inoccupées entre les différents paquets est variable.

3. Dispositif de mesure capacitif selon l'une des revendications précédentes, **caractérisé en ce que** la largeur (24) des électrodes de capteur (21) est supérieure à la largeur desdits intervalles élémentaires (P) entre les positions initiales possibles (22).

4. Dispositif de mesure capacitif selon l'une des revendications précédentes, **caractérisé en ce que** la succession des indices de groupe à l'intérieur des différents jeux d'électrodes de capteur est différente.

5. Dispositif de mesure capacitif selon l'une des revendications précédentes, **caractérisé en ce que** la profondeur d'interpénétration mutuelle des différents jeux est variable.

6. Dispositif de mesure capacitif selon l'une des revendications 2 à 4, **caractérisé en ce que** le nombre d'électrodes par paquets est variable.

7. Dispositif de mesure capacitif selon l'une des revendications précédentes, **caractérisé en ce que** chaque électrode de règle (10) comporte une partie placée face aux électrodes de capteur (21) qui fonctionne en électrodes de transmission (12), et **en ce que** la largeur de cette partie fonctionnant en électrode de transmission vaut sensiblement la moitié (λ/2) du pas de règle (λ)

8. Dispositif de mesure capacitif selon l'une des revendications précédentes, **caractérisé en ce que** le capteur (2) est en outre muni d'au moins une électrode d'excitation (20), et **en ce que** chaque électrode de règle (10) comporte une partie placée face à la ou auxdites électrodes d'excitation (20) du capteur qui fonctionne en électrodes de réception, en sorte que la ou les électrodes d'excitation (29) du capteur peuvent polariser au moins une partie des électrodes de règle (10) avec un signal d'excitation (CT).

9. Dispositif de mesure capacitif selon l'une des revendications 1 à 7, **caractérisé en ce que** le capteur (2) est en outre muni d'au moins une électrode de réception (20) et **en ce que** le dispositif fonctionne selon le principe de l'injection multiple de signaux différents sur les électrodes de capteur (21) et de la réception simple sur au moins l'électrode de réception (20).

## Claims

1. Capacitive measuring device comprising a scale (1) provided with a network of scale electrodes (11) spaced by a scale pitch (λ) and a sensor capable of being displaced opposite said scale, the sensor being provided with a network of sensor electrodes (21), wherein:
the sensor electrodes (21) are placed in initial positions (22) spaced from one another by an elementary interval (P) obtained by dividing the scale pitch (λ) by N, N being an integer greater than or equal to 2, so that the sensor electrodes' phase has N different values,
each sensor electrode (21) has a group index (23) corresponding to 1 plus the number modulo N of elementary intervals (P) between this electrode's initial position (22) and a reference position (Ref) along the sensor electrode network,
sensor electrodes (21) having the same group index (23) and thus the same phase are separated by sensor electrodes having a different group index,
said sensor electrodes (21) are divided on the sensor (2) in at least two sets of electrodes, a set of electrodes being defined as a group of N electrodes having a different group index (23), each sensor electrode (21) belonging to one single set,
each set of sensor electrodes (21) is spread over a set interval (Iⱼ) greater than the scale pitch (λ),
the capacitances (Cmi) constituted between the scale electrodes (11) and the groups of sensor electrodes (21) depend on the relative position of the sensor (2) relative to the scale (1),
**characterized in that**
the set intervals (Iⱼ) occupied by said successive sets of sensor electrodes interpenetrate so that the different sets are enmeshed.

2. Capacitive measuring device according to claim 1, **characterized in that** the sensor electrodes (21) are spread in bundles (25), each bundle being constituted by one electrode or by several directly adjacent electrodes, and **in that** the number of possible initial positions (22) unoccupied between the different bundles is variable.

3. Capacitive measuring device according to one of the preceding claims, **characterized in that** the width of the sensor electrodes (21) is greater than the width of said elementary intervals (P) between the possible initial positions (22).

4. Capacitive measuring device according to one of the preceding claims, **characterized in that** the succession of the group indexes inside the different sets of sensor electrodes is different.

5. Capacitive measuring device according to one of the preceding claims, **characterized in that** the mutual interpenetration depth of the different sets is variable.

6. Capacitive measuring device according to one of the claims 2 to 4, **characterized in that** the number of electrodes per bundle is variable.

7. Capacitive measuring device according to one of the preceding claims, **characterized in that** each scale electrode (10) comprises a part placed opposite the sensor electrodes (21) and functioning as transmission electrode (12) and **in that** the width of this part functioning as transmission electrode equals more or less half (λ/2) of the scale pitch (λ).

8. Capacitive measuring device according to one of the preceding claims, **characterized in that** the sensor (2) is further provided with at least one excitation electrode (20), and **in that** each scale electrode (10) comprises a part placed opposite the sensor's excitation electrode or electrodes (20) and functioning as receiving electrode, so that the sensor's excitation electrode or electrodes (29) can polarize at least part of the scale electrodes (10) with an excitation signal (CT).

9. Capacitive measuring device according to one of the claims 1 to 7, **characterized in that** the sensor (2) is further provided with at least one receiving electrode (20) and **in that** the device operates according to the principle of multiple injection of different signals on the sensor electrodes (21) and simple receiving on at least the receiving electrode (20).

## Patentansprüche

1. Kapazitive Messvorrichtung beinhaltend ein Massstab (1) mit einem Netzwerk von Massstabelektroden (11) ausgestattet, welche mit einer Massstabeinteilung (λ) angeordnet sind, und einen Sensor, der gegenüber benanntem Massstab bewegt werden kann, wobei der Sensor mit einem Netzwerk von Sensorelektroden (21) ausgestattet ist, in welcher:
die Sensorelektroden (21) in Anfangspositionen (22) im Abstand eines Elementarintervals (P) angeordnet sind, welches durch Dividieren der Massstabeinteilung (λ) durch N erreicht wird, wobei N eine Ganzzahl grösser als oder gleich 2 ist, so dass die Phase der Sensorelektroden N verschiedene Werte annimmt,
jede Sensorelektrode (21) einen Gruppenindex (23) hat, welcher 1 plus der Zahl Modulo N der Elementarintervalen (P) zwischen der Anfangsposition (22) dieser Elektrode und deren Referenzposition (Ref) entlang des Sensorelektrodennetzwerkes entspricht,
Sensorelektroden (21), welche den gleichen Gruppenindex (23) und somit die gleiche Phase aufweisen, durch Sensorelektroden mit einem anderen Gruppenindex getrennt werden,
benannte Sensorelektroden (21) in mindestens zwei Elektrodensätze auf dem Sensor (2) aufgeteilt werden, wobei ein Elektrodensatz als eine Gruppe von N Elektroden mit einem verschiedenen Gruppenindex (23) definiert wird, wobei jede Sensorelektrode (21) zu einem einzigen Satz gehört,
jeder Satz von Sensorelektroden (21) über einem Satzinterval (Iⱼ) grösser als die Massstabeinteilung (λ) verteilt wird,
die Kapazitäten (Cmi), welche zwischen den Massstabelektroden (11) und den Gruppen von Sensorelektroden (21) entstehen, von der relativen Position des Sensors (2) in Bezug auf den Massstab (1) abhängen,
**dadurch gekennzeichnet, dass**:
die Satzintervalle (Iⱼ), welche von benannten sukzessiven Sätzen von Sensorelektroden besetzt werden, sich gegenseitig durchdringen, so dass die verschiedenen Sätze durchgemengt werden.

2. Kapazitive Messvorrichtung gemäss Anspruch 1, **dadurch gekennzeichnet, dass** die Sensorelektroden (21) in Packeten (25) verteilt sind, wobei jedes Packet aus einer Elektrode oder aus mehreren direkt aneinanderliegenden Elektroden besteht, und dass die Anzahl möglicher unbesetzter Anfangspositionen (22) zwischen den verschiedenen Packeten variabel ist.

3. Kapazitive Messvorrichtung gemäss einem der vorhergehenden Ansprüche, **dadurch gekennzeichnet, dass** die Breite der Sensorelektroden (21) grösser als die Breite benannter Elementarintervallen (P) zwischen den möglichen Anfangspositionen (22) ist.

4. Kapazitive Messvorrichtung gemäss einem der vorhergehenden Ansprüche, **dadurch gekennzeichnet, dass** die Folge der Gruppenindexe innerhalb der verschiedenen Sätze von Sensorelektroden verschieden ist.

5. Kapazitive Messvorrichtung gemäss einem der vorhergehenden Ansprüche, **dadurch gekennzeichnet, dass** die gegenseitige Durchdringungstiefe der verschiedenen Sätze variabel ist.

6. Kapazitive Messvorrichtung gemäss einem der Ansprüche 2 bis 4, **dadurch gekennzeichnet, dass** die Anzahl der Elektroden pro Packet variabel ist.

7. Kapazitive Messvorrichtung gemäss einem der vorhergehenden Ansprüche, **dadurch gekennzeichnet, dass** jede Massstabelektrode (10) einen Teil enthält, welcher gegenüber den Sensorelektroden (21) liegt und als Übermittlungselektrode (12) funktioniert, und dass die Breite dieses Teils, welcher als Übermittlungselektrode funktioniert, mehr oder weniger der Hälfte (λ/2) der Masseinheit (λ) entspricht.

8. Kapazitive Messvorrichtung gemäss einem der vorhergehenden Ansprüche, **dadurch gekennzeichnet, dass** der Sensor (2) ferner mit mindestens einer Anregungselektrode (20) ausgestattet ist, und dass jede Massstabelektrode (10) einen Teil enthält, welcher gegenüber der Anregungselektrode oder - elektroden (20) liegt und als Empfängerelektrode (12) funktioniert, so dass die Anregungselektrode oder-elektroden (29) des Sensors mindestens einen Teil der Massstabelektroden (10) mit einem Anregungssignal (CT) polarisieren kann.

9. Kapazitive Messvorrichtung gemäss einem der Ansprüche 1 bis 7, **dadurch gekennzeichnet, dass** der Sensor (2) ferner mit mindestens einer Empfängerelektrode (20) ausgestattet ist, und dass die Vorrichtung nach dem Prinzip der Mehrfachinjektion verschiedener Signale auf die Sensorelektroden (21) und des einfachen Empfangs auf mindestens der Empfangselektrode (20) funktioniert.
